# EUROPÄISCHE PATENTSCHRIFT

(11) **EP 0 836 963 B1**
(45) Veröffentlichungstag und Bekanntmachung des Hinweises auf die Patenterteilung: **01.12.1999**
(21) Anmeldenummer: 97116767.1
(22) Anmeldetag: 26.09.1997
(51) Int. Cl.: B60K 37/02

(54) **Kombiinstrument**
Combined instrument
Combiné indicateur

(30) Priorität: 17.10.1996 DE 19642834
(43) Veröffentlichungstag der Anmeldung: 22.04.1998
(73) Patentinhaber: DaimlerChrysler AG, 70567 Stuttgart (DE)
(72) Erfinder: Futschik, Hans-Dieter, 75391 Gechingen (DE); Weber, Norbert, 71149 Bondorf (DE)

(56) Entgegenhaltungen:
- EP-A- 0 083 701
- DE-A- 4 343 201
- US-A- 4 475 614
- PATENT ABSTRACTS OF JAPAN vol. 007, no. 005 (M-184), 11.Januar 1983 -& JP 57 164816 A (NISSAN JIDOSHA KK), 9.Oktober 1982,
- PATENT ABSTRACTS OF JAPAN vol. 096, no. 006, 28.Juni 1996 -& JP 08 040114 A (DAIHATSU MOTOR CO LTD), 13.Februar 1996,

## Beschreibung

Die Erfindung betrifft ein Kombiinstrument- und Blendensystem mit den Merkmalen im Oberbegriff des Patentanspruchs 1.

Es ist ein System der eingangs genannten Art bekannt (JP-A-57164816), bei dem das in die Instrumententafel eines Fahrzeugs eingesetzte Kombiinstrument einen Gehäuseteil mit Frontrahmen und darin enthaltener Instrumenteinrichtung aufweist. Dem Frontrahmen ist eine Blende vorgelagert, die ein eigenständiges Bauteil bildet, das lösbar am Frontrahmen befestigbar ist. Die Blende hat eine Rückfläche, die im wesentlichen parallel zur Vorderfläche des Frontrahmens und hierbei in einer im wesentlichen bogenförmigen, konvex nach hinten gekrümmten Ebene verläuft. Auch die Vorderfläche des Frontrahmens verläuft in Anpassung daran an die konvex gekrümmte Rückfläche der Blende ebenfalls in einer konkaven Ebene. Ziel des Kombiinstruments ist es, eine Ausdehnung der Blende unter Temperatureinflüssen auszugleichen, um eine Verformung der Blende zu verhindern. Dies geschieht dadurch, daß die Blende auf der Rückseite längs des oberen und unteren Randes nach hinten abstehende Rastfinger trägt und in Zuordnung zu diesen Rastfingern an der Instrumententafel entsprechende schlitzartige Rastaufnahmen vorgesehen sind, wobei oben und unten jeweils drei Rastfinger und zugeordnete Rastaufnahmen vorhanden sind. Die Breite der mittleren Rastfinger soll genau so groß wie die Breite der diesen zugeordneten Rastaufnahmen sein. Hingegen soll bei den beiden äußeren Rastfingern deren Breite kleiner bemessen sein als die Breite der zugeordneten Rastaufnahmen, wodurch bei etwaiger temperaturbedingter Verformung der Blende deren Relativbewegung relativ zur Instrumententafel möglich ist und damit Verformungen der Blende ausgeschlossen sind. Die der Instrumententafel abgewandte Vorderfläche der Blende folgt nicht dem Verlauf der Instrumententafel, sondern sie ist, im vertikalen Schnitt betrachtet, in einer solchen Ebene enthalten, die spitzwinklig zur Vorderfläche des Frontrahmens und der Instrumententafel verläuft. Dabei steht die Vorderfläche der Blende mit deutlichem Abstand über der der Vorderfläche des Frontrahmens und der Instrumententafel nach vorn hin vor und ist in keiner Weise an den Verlauf der Instrumententafel angepaßt.

Aus EP-0 083 701 A2 sind Modulelemente zu entnehmen, u. a. als Modulelement ein Frontrahmen als Gehäuseteil mit enthaltener Instrumenteinrichtung ohne Blende.

Ferner ist ein Kombiinstrument bekannt (DE-43 43 201 A1), das aus einem Gehäuserückteil und einem Gehäusevorderteil besteht, die unter Aufnahme der Instrumenteinrichtungen zusammengesetzt sind, wobei das Gehäuserückteil auf ein schräg verlaufendes Armaturenbrett aufgesetzt ist. Das Gehäusevorderteil weist einen Frontrahmen und eine diesem vorgelagerte Blende auf und bildet ein einstückiges Bauteil, bei dem der Frontrahmen rückseitig einen Tubus für die Aufnahme der Instrumenteinrichtungen aufweist. In Abstand von der Vorderfläche der Blende weist der Frontrahmen einen inneren Absatz auf, an den eine Abdeckscheibe angelegt ist, die durch Schweißen oder Kleben befestigt ist oder auch als Einlegeteil beim Herstellen des Gehäusevorderteils in einem Arbeitsgang durch Spritzgießen umspritzt wird.

Es ist ferner ein Kombiinstrument bekannt (DE-33 46 370 A1), bei dem das Anzeigefeld in Abstand von der Vorderseite der Instrumententafel verläuft und dabei einen vom Verlauf der Instrumententafel abweichenden,nämlich in der Vertikalen schrägen,Verlauf hat. Ausgehend von diesem Anzeigefeld erstreckt sich bei diesem Kombiinstrument nach vorn hin ein als Blende wirkender Gehäuseteil des Kombiinstruments, wobei die Vorderfläche dieses sich nach vorn erstreckenden Gehäuseteils dem Verlauf der Instrumententafel folgt. Der als Blende fungierende vordere Bereich des Gehäuses des Kombiinstruments ist einstückig mit dem übrigen Gehäuseteil.

Es sind Fahrzeuge bekannt, bei denen die Instrumententafel keinen symmetrischen Verlauf, betrachtet über die Breite des Fahrzeuges, aufweist sondern der Verlauf asymmetrisch ist. An diesen Verlauf ist auch das jeweils im Bereich des Fahrzeugführersitzes befindliche Kombiinstrument anzupassen.

Daraus ergibt sich, daß ein Kombiinstrument, das für ein linksgesteuertes Fahrzeug konzipiert ist, nicht für die rechtsgesteuerte Fahrzeugvariante benutzt werden kann, und umgekehrt. Somit ist in solchen Fällen einer asymmetrischen Instrumententafel eine Anpassung an diese beiden Fahrzeugvarianten nur unter dem großen Kostenaufwand eines kompletten, daran angepaßten Kombiinstruments möglich. Dies bedeutet einen großen Kostenaufwand und auch einen erheblichen Aufwand an Logistik und Lagerhaltung.

Der Erfindung liegt die Aufgabe zugrunde, ein Kombiinstrument- und Blendensystem der eingangs genannten Art so auszubilden, daß dieses bei einem asymmetrischen Verlauf der Instrumententafel mit nur geringem Anpassungsaufwand sowohl für ein linksgesteuertes Fahrzeug als auch für ein rechtsgesteuertes Fahrzeug verwendet werden kann.

Die Aufgabe ist bei einem Kombiinstrument der eingangs genannten Art gemäß der Erfindung durch die Merkmale im Patentanspruch 1 gelöst. Dadurch bedarf es bei asymmetrischem Verlauf der Instrumententafel zur Anpassung jeweils nur einer entsprechend gestalteten Blende, um das Kombiinstrument sowohl für die linksgesteuerte als auch für die rechtsgesteuerte Fahrzeugvariante einsetzen zu können. Der eigentliche Instrumententeil mit Anzeigenfeld und den einzelnen Instrumenten ist dabei jeweils als neutrales Bauteil sowohl für die eine als auch für die andere Variante einsetzbar. Dies führt zu einer Reduzierung des Aufwands, insbesondere des Kostenaufwands und des Aufwands für Logistik und Lagerhaltung.

Weitere vorteilhafte Erfindungsmerkmale und Ausgestaltungen ergeben sich aus den Ansprüchen 2 bis 4. Weitere Einzelheiten und Vorteile der Erfindung ergeben sich aus der nachfolgenden Beschreibung.

Die Erfindung ist nachfolgend anhand von in den Zeichnungen gezeigten Ausführungsbeispielen näher erläutert. Es zeigen:
- Fig. 1: eine schematische Draufsicht eines Kombiinstruments mit vorgeschalteter Blende gemäß einem ersten Ausführungsbeispiel,
- Fig. 2: eine schematische Ansicht des Kombiinstruments und der Blende in Pfeilrichtung II in Fig. 1 gemäß dem ersten Ausführungsbeispiel, wobei die Blende noch nicht am Kombiinstrument angebracht ist,
- Fig. 3: eine schematische Draufsicht etwa entsprechend derjenigen in Fig. 1 eines Kombiinstruments mit vorgeschalteter Blende gemäß einem zweiten Ausführungsbeispiel,
- Fig. 4: eine schematische Ansicht etwa entsprechend derjenigen in Fig. 2 des Kombiinstruments und der Blende in Pfeilrichtung IV in Fig. 3, jedoch bei noch nicht angebrachter Blende.

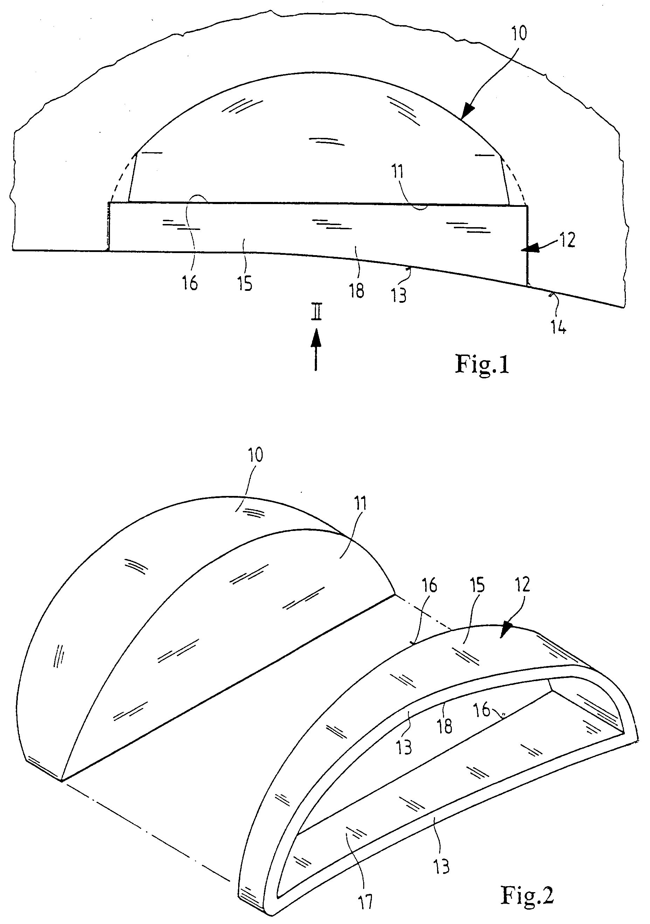

In Fig. 1 und 2 ist schematisch ein Kombiinstrument 10 gezeigt, das in üblicher Weise z.B. im Bereich seiner Vorderfläche 11, die durch ein Deckglas abgedeckt sein kann, oder in Abstand von der Vorderfläche 11 weiter innen ein Anzeigefeld aufweist. Dem Kombiinstrument 10 ist eine Blende 12 vorgeschaltet, deren Vorderfläche 13 einem vorgegebenen Verlauf 14 einer Instrumententafel folgt. Bei dem in Fig. 1 und 2 gezeigten ersten Ausführungsbeispiel ist eine solche Blende 12 vorgesehen, deren dem Kombiinstrument 10 abgewandte Vorderfläche 13 einen solchen Krümmungsverlauf aufweist, der dem Verlauf 14 der Instrumententafel im Bereich des Fahrzeugführersitzes bei einem linksgesteuerten Fahrzeug folgt.

Die Blende 12 ist in bezug auf das Kombiinstrument 10 als eigenständiges, am Kombiinstrument 10 lösbar befestigtes Bauteil 15 ausgebildet. Die Befestigung dieses Bauteils 15 am Kombiinstrument 10 kann in vielfältiger Weise und mit Hilfe unterschiedlich gestalteter üblicher Befestigungselemente bzw. Befestigungsmöglichkeiten erfolgen.

Die Vorderfläche 11 des Kombiinstruments 10 verläuft innerhalb einer planen Ebene, wie insbesondere Fig. 1 zeigt. Die Blende 12 weist auf ihrer dem Kombiinstrument 10 zugewandten Rückseite eine ebene Rückfläche 16 auf, die z.B. innerhalb der planen Vorderfläche 11 des Kombiinstruments 10 verläuft, wie Fig. 1 zeigt, wobei die Blende 12 mit ihrer Rückfläche 16 an dieser planen Vorderfläche 11 anliegen kann.

Bei einem anderen, nicht gezeigten Ausführungsbeispiel verläuft die plane Rückfläche 16 der Blende 12 zumindest im wesentlichen parallel zur Vorderfläche 11 und hierbei in Abstand von dieser.

Die Blende 12 ist als dem Kombiinstrument 10 vorgesetzter Rahmen ausgebildet und besteht z.B. vorzugsweise aus einem Kunststoffteil, insbesondere Kunststofformteil. Die rahmenförmige Blende 12 weist ausreichend dick bemessene Wandteile 17 und 18 auf, deren Verlauf, betrachtet innerhalb einer die Rückfläche 16 enthaltenden Ebene, an den Verlauf des Kombiinstruments 10, betrachtet in der die plane Vorderfläche 11 enthaltenden Ebene, angepaßt ist.

Die Gesamtheit des Kombiinstruments in Fig. 1 und 2 ist somit zweiteilig. Sie besteht zum einen aus dem Kombiinstrument 10, der den einen Bauteil darstellt und sämtliche Komponenten des Instruments enthält, und zum anderen aus dem als auswechselbaren, vorderen Rahmen gestalteten eigenständigen Bauteil 15, der als Vorsatzblende fungiert und über den die Anpassung an den jeweiligen Verlauf 14 der Instrumententafel erfolgt. Beim ersten Ausführungsbeispiel in Fig. 1 und 2 ist als Blende 12 eine solche dem Kombiinstrument 10 vorgeschaltet, deren Vorderfläche 13 dem Verlauf 14 der Instrumententafel im Bereich des Fahrzeugführersitzes folgt, wie er bei einem linksgesteuerten Fahrzeug vorliegt.

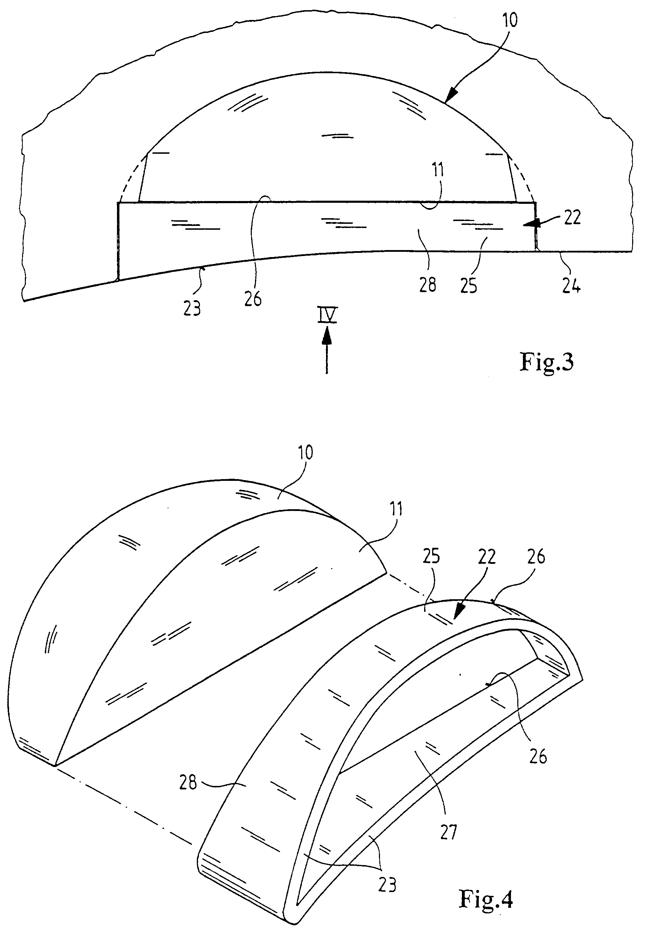

Beim zweiten Ausführungsbeispiel in Fig. 3 und 4 ist das gleiche Kombiinstrument 10 mit planer Vorderfläche 11 wie beim ersten Ausführungsbeispiel in Fig. 1 und 2 gezeigt. Im Unterschied zum ersten Ausführungsbeispiel ist jedoch eine andere Blende 22 vorgeschaltet. Die Blende 22 unterscheidet sich von der Blende 12 des ersten Ausführungsbeispiels allein durch einen anderen Verlauf ihrer Vorderfläche 23, die nämlich einen solchen Krümmungsverlauf aufweist, der dem Verlauf 24 der Instrumententafel im Bereich des nicht gezeigten Fahrzeugführersitzes bei einem rechtsgesteuerten Fahrzeug folgt. Dies ist insbesondere aus der Draufsicht in Fig. 3 zu erkennen. In Übereinstimmung mit dem ersten Ausführungsbeispiel weist die Blende 22 auf ihrer der ebenen Vorderfläche 11 des Kombiinstruments 10 zugewandten Rückseite eine plane Rückfläche 26 auf. Während beim ersten Ausführungsbeispiel gemäß Fig. 1 und 2 der Wandteil 17 und 18 der Blende 12 bei der Draufsicht in Fig. 1 eine von links nach rechts zunehmende Breite zur Anpassung an den Verlauf 14 der Instrumententafel aufweist, hat beim zweiten Ausführungsbeispiel in Fig. 3 und 4 der Wandteil 28 und 27 der Blende 22 eine in der Darstellung von rechts nach links zunehmende Breite zur Anpassung an den Verlauf 24 der Instrumententafel. Dies ist somit der einzige Unterschied gegenüber der Blende 12.

Für ein Fahrzeug, das linksgesteuert wird mit links befindlichem Fahrzeugführersitz,kommt die Blende 12 gemäß Fig. 1 und 2 zum Einsatz, während bei einem solchen Fahrzeug, das rechtsgesteuert wird und bei dem sich der Fahrzeugführersitz rechts befindet, eine Blende 22 gemäß dem zweiten Ausführungsbeispiel in Fig. 3 und 4 zum Einsatz kommt. Das Kombiinstrument 10 ist jeweils unverändert das gleiche. Es kann somit für beide erläuterte Varianten eingesetzt werden, wobei diesen Varianten allein durch die Wahl der entsprechenden Blende 12 bzw. 22 Rechnung getragen wird. Dadurch reduzieren sich die Kosten auf ein Minimum, da als anpassendes Bauteil lediglich eine entsprechende Blende 12 bzw. 22 notwendig ist, die insbesondere als Kunststoffteil kostengünstig ist. Von Vorteil ist ferner, daß im Rahmen der Logistik und Lagerhaltungskosten aufgrund des geringen Volumens der jeweiligen Blende 12 bzw. 22 weitere Kosten eingespart werden.

In Fig. 1 - 4 steht die jeweilige Blende 12 bzw. 22 über die Umfangskontur des Kombiinstruments 10 über. Dies ist jedoch nicht zwingend. Wie in Fig. 1 und Fig. 3 lediglich gestrichelt angedeutet ist, kann die Blende 12 bzw. 22 auch bündig mit dem Kombiinstrument 10 abschließen.

## Patentansprüche

1. Kombininstrument- und Blendensystem für eine Instrumententafel eines Fahrzeugs, mit einem Frontrahmen als Gehäuseteil mit enthaltener Instrumenteinrichtung, dem eine Blende (12; 22) als eigenständiges, am Frontrahmen lösbar befestigbares Bauteil (15; 25) vorgelagert ist, wobei die Blende (12; 22) mit ihrer dem Frontrahmen zugewandten Rückfläche (16; 26) zumindest im wesentlichen parallel zur Vorderfläche (11) des Frontrahmens verläuft,
**dadurch gekennzeichnet**,
daß ein Kombiinstrument (10) für die Instrumententafel eines rechts- oder linksgelenkten Fahrzeugs sowie eine Blende (12), die dem Verlauf (14) der Instrumentafel eines linksgelenkten Fahrzeugs folgt, und eine Blende (22), die dem davon abweichenden anderen Verlauf (24) der Instrumententafel eines rechtsgelenkten Fahrzeugs folgt, vorgesehen sind, wobei die Vorderfläche (11) des Frontrahmens und die Rückfläche (16; 26) der jeweiligen Blende (12; 22) jeweils innerhalb einer planen Ebene verlaufen und die Vorderfläche (13; 23) der jeweiligen Blende (12; 22) bündig mit der Instrumententafel abschließt.

2. Kombiinstrument- und Blendensystem nach Anspruch 1,
**dadurch gekennzeichnet**,
daß die jeweilige Blende (12; 22) mit ihrer Rückfläche (16; 26) an der Vorderfläche (11) des Frontrahmens anliegt oder in Abstand davon verläuft.

3. Kombiinstrument und Blendensystem nach Anspruch 1 oder 2,
**dadurch gekennzeichnet**,
daß die jeweilige Blende (12; 22) als dem Frontrahmen vorgesetzter Rahmen ausgebildet ist.

4. Kombiinstrument- und Blendensystem nach einem der Ansprüche 1 bis 3,
**dadurch gekennzeichnet**,
daß die jeweilige Blende (12; 22) aus einem Kunststoffteil, insbesondere Kunststofformteil, gebildet ist.

## Claims

1. An instrument cluster and fascia system for an instrument panel in a vehicle with a front frame as a housing part with an instrument device contained therein, positioned in front of which is a fascia (12; 22) as an independent component (15; 25) which is fixed to the front frame in a detachable manner, with the back surface (16; 26) of the fascia (12; 22) facing the front frame running at least essentially parallel to the front surface (11) of the front frame,
**characterised in that**
an instrument cluster (10) for the instrument panel in a right- or left-hand drive vehicle and a fascia (12) which follows the course (14) of the instrument panel in a left-hand drive vehicle and a fascia (22) which follows the different course (24) of the instrument panel in a right-hand drive vehicle are provided, with the front surface (11) of the front frame and the back surface (16; 26) of the respective fascia (12; 22) running within a flat plane and the front surface (13; 23) of the respective fascia (12; 22) lying flush with the instrument panel.

2. An instrument cluster and fascia system in accordance with Claim 1,
**characterised in that**
the back surface (16; 26) of the respective fascia (12; 22) lies adjacent to the front surface (11) of the front frame or runs at a distance therefrom.

3. An instrument cluster and fascia system in accordance with Claim 1 or 2,
**characterised in that**
the respective fascia (12; 22) is designed as a frame positioned in front of the front frame.

4. An instrument cluster and fascia system in accordance with one of Claims 1 to 3,
**characterised in that**
the respective fascia (12; 22) is formed by a plastic part, in particular a pre-formed plastic part.

## Revendications

1. Ensemble indicateur combiné et système d'écran pour une planche de bord d'un véhicule, comprenant un cadre frontal sous forme de partie de carter renfermant un ensemble indicateur devant lequel est placé un écran (12; 22) sous forme de pièce distincte (15; 25) pouvant être fixée de manière amovible au cadre frontal, l'écran (12; 22) s'étendant, avec sa face arrière (16; 26) dirigée vers le cadre frontal, au moins sensiblement de manière parallèle à la face avant (11) du cadre frontal,
**caractérisé** en ce que sont prévus un ensemble indicateur combiné (10) pour la planche de bord d'un véhicule à direction à droite ou à direction à gauche, ainsi qu'un écran (12) qui suit le tracé (14) de la planche de bord d'un véhicule à direction à gauche, et un écran (22) qui suit un autre tracé (24) différent du précédent, de la planche de bord d'un véhicule à direction à droite, la face avant (11) du cadre frontal et la face arrière (16; 26) de l'écran respectif (12; 22) s'étendant chacune dans une surface plane, et la face avant (13; 23) de l'écran respectif (12; 22) arrivant au ras de la planche de bord en suivant son tracé.

2. Ensemble indicateur combiné et système d'écran selon la revendication 1, **caractérisé** en ce que l'écran respectif (12; 22) s'appuie avec sa face arrière (16; 26) sur la face avant (11) du cadre frontal ou s'étend à distance de celle-ci.

3. Ensemble indicateur combiné et système d'écran selon la revendication 1 ou 2, **caractérisé** en ce que l'écran respectif (12; 22) est réalisé sous forme de cadre placé en avant du cadre frontal.

4. Ensemble indicateur combiné et système d'écran selon l'une des revendications 1 à 3, **caractérisé** en ce que l'écran respectif (12; 22) est formé par une pièce de matière plastique, notamment une pièce moulée en matière plastique.
